# EUROPEAN PATENT APPLICATION

(11) **EP 0 632 320 A1**
(43) Date of publication of application: **04.01.1995**
(21) Application number: 94109966.5
(22) Date of filing: 28.06.1994
(51) Int. Cl.: G03B 42/04

(54) **Film cassette**

(30) Priority: 30.06.1993 US 86019
(71) Applicant: EASTMAN KODAK COMPANY, Rochester, New York 14650-2201 (US)
(72) Inventor: Robertson, Jeffrey Charles, c/o EASTMAN KODAK CO., Rochester, New York 14650-2201 (US)
(74) Representative: Phillips, Margaret Dawn

(57) **Abstract**

In known cassettes for holding X-ray film, it is difficult to know whether there is film in the cassette without opening it, and if there is film in the cassette, whether that film has been exposed. Described herein is an improved X-ray film cassette having a base (14) and a cover (16) adapted to close upon the base (14). The cover (16) is provided with an identification window. A pressure plate assembly (20) is secured to the cover (16) of the cassette (10). The cover (16), pressure plate assembly (20) and base (14) form a light-tight space for receiving a sheet of X-ray film. The pressure plate assembly (20) is also provided with an identification window which is in substantial alignment with the identification window of the cover. A light-tight slideable window shutter is provided for covering of the identification window of the cover (16) and/or the pressure plate assembly (20). The slideable window shutter, when in a first position, provides a light-tight seal, and when in a second position, allows information to be provided to an X-ray film contained within the cassette. An indicator assembly is secured to the pressure plate and is at least partially visible through the cover for indicating when film is present within the cassette and for indicating when the window shutter has been opened.

## Description

The present invention relates to cassettes for holding photosensitive material. Still, more particularly, the present invention relates to a cassette for holding X-ray film.

In the prior art it has been difficult, especially in connection with X-ray cassettes, to ascertain whether or not the cassette contains film without opening of the cassette. As a result of this inability, mistakes have often been made and either an empty cassette was used during an X-ray exposure, or a cassette was used more than once. In each instance, the intended X-ray had to be retaken, which is not only very wasteful with respect to time, but also exposes the patient to unnecessary amounts of radiation.

The prior art has suggested the use of an indicator for identifying if the cassette contains an X-ray film. For example, US-A-4,248,172 and German Patent 825,947 disclose a small moveable button which is slideable between a first position wherein the button is flush with the exterior surface of the cassette, and a second position wherein the button was recessed from the exterior surface. If film is present, the button is prevented from falling into the second position and thus indicating the presence of film.

Another common feature in X-ray cassettes is the patient identification window. Typically, this feature consists of an opening through the cassette which is covered by a light-tight slideable shutter. In use, the cassette is placed in the patient identification camera which establishes a light-tight seal against the cassette surrounding the window; opens the shutter; optically transfers patient identification information on to the X-ray film contained within the cassette; closes the shutter; and retracts the sealing means.

It is also common in places where radiography is practiced in large volumes, such as in large hospitals, to provide machines which automate the unloading and reloading of X-ray cassettes. Typically, these machines are comprised of a light-tight chamber into which the X-ray cassette is passed or placed. The chamber contains a first mechanism to open the cassette and a second mechanism generally featuring a plurality of suction cups to pick up the film and remove it from the cassette. Such mechanisms often fail when the film, which has been pressed into intimate contact with the intensifying screen, sticks to the upper screen when the cassette is open and thus is not in the proper position to be picked up by the suction cup mechanism.

Intensifying screens are often used in cassettes in order to increase exposure of the X-ray film. However, there is often some loss in sharpness of the image which is formed. This loss in sharpness is related to the separation distance between the light-sensitive layers of the film, and the light-emitting layers of the intensifying screen. To minimize this loss in sharpness, intensifying screens are often held in intimate contact with the film. In typical X-ray prior art cassettes, this intimate contact is normally accomplished by mounting the screens on resilient foam pads which are adhered to the cassette when closed.

An improved film presence indicator has been developed which will indicate the presence of film in the cassette regardless of the cassette orientation and will, in addition, indicate whether a patient identification window of the cassette has been actuated. Further, when a cassette is open for removal of the film, the film presence indicator will push the film away from the upper screen assuring that the film is in the proper location for extraction by automatic cassette loaders.

In accordance with one aspect of the present invention, there is provided a film cassette comprising:-
a base portion;
a cover portion adapted to close upon the base portion and having an identification window portion;
a pressure plate disposed within the cassette, the pressure plate and the base portion forming a space for receiving a sheet of film material, the pressure plate having an identification window portion which is in substantial alignment with the identification window portion of the cover portion;
a light-tight slideable window shutter for covering respective identification window portions of the pressure plate and/or the cover portion, the slideable window shutter, when in a first position, provides a light-tight seal for the identification windows, and when in a second position, allows information to be provided to the film material contained within the cassette; and
an indicator assembly disposed within the cassette and at least partially visible through at least one opening provided in the cover portion for indicating when film is present within the cassette and for indicating when the slideable window shutter has been opened.

Advantageously, the indicator assembly is secured to the pressure plate.

For a better understanding of the present invention, reference will now be made, by way of example only, to the accompanying drawings in which:-
Figure 1 is a perspective view of a cassette made in accordance with the present invention;
Figure 2 is a side elevational view of the cassette shown in Figure 1 showing the cassette in the open position;
Figure 3 is a exploded perspective view of the cassette shown in Figure 1;
Figure 4 is a cross-sectional view of the cassette shown in Figure 1 as taken along line 4-4;
Figure 5A is a partial cross-sectional view of the cassette shown in Figure 1 as taken along line 5-5 illustrating the film presence indicator of the cassette in a first predetermined position;
Figure 5B is a view similar to that shown in Figure 5A illustrating the film presence indicator in a second predetermined position;
Figure 5C is a view similar to Figure 5A illustrating the film presence indicator in a third predetermined position;
Figure 6A is a partial top plan view of the cassette as outlined by line 6-6 in Figure 1 illustrating the identification openings used to determine the position of the film presence indicator when the film presence indicator is in the position shown in Figure 5A;
Figure 6B is a view similar to that shown in Figure 6A, except it illustrates the film identification openings as they would appear when the film presence indicator is in the position illustrated by Figure 5B;
Figure 6C is a view similar to that shown in Figure 6A illustrating the identification openings as they would appear when the film presence indicator is in the position illustrated by Figure 5C;
Figure 6D is a cross-sectional view of the cover as taken along line 6D-6D of Figure 6B illustrating the indicating openings;
Figure 7 is a partial exploded view of the pressure plate assembly;
Figure 8A is a partial perspective view of the pressure plate assembly illustrating the shutter in the closed position;
Figure 8B is a view similar to that shown in Figure 8A except illustrating the shutter assembly in the open position;
Figure 9A is an enlarged partial perspective view of the film presence film indicator assembly illustrating the film presence indicator in the position illustrated in Figure 5A;
Figure 9B is a view similar to that shown in Figure 9A illustrating the film presence indicator in the position illustrated in Figure 5B;
Figure 9C is a view similar to that shown in Figure 9A illustrating the film presence indicator in the position illustrated in Figure 5C;
Figure 10 is an enlarged perspective view of a portion of the pressure plate illustrating where the film presence indicator would be mounted with the spring and film presence indicator removed;
Figure 11 is a top plan view of Figure 10;
Figure 12 is an enlarged bottom perspective view of the spring of the film presence indicator assembly;
Figure 13 is a top perspective view of the spring of Figure 12;
Figure 14A is a top perspective view of the film presence indicator assembly;
Figure 14B is a top plan view of the film presence indicator assembly shown in Figure 14A;
Figure 14C is a cross-sectional view of the film presence indicator taken along line 14C-14C of Figure 14B;
Figure 15A is a bottom perspective view of the film presence indicator;
Figure 15B is a bottom plan view of the indicator shown in Figure 15A;
Figure 15C is a cross-sectional view of the film presence indicator as taken along line 15C-15C of Figure 15B;
Figure 16 is a bottom plan view of the spring shown in Figure 12;
Figure 17 is a greatly enlarged bottom plan view of the spring head of the spring shown in Figure 16 as outlined by line 17-17; and
Figure 18 is a cross-sectional view as taken along line 18-18 of Figure 17.

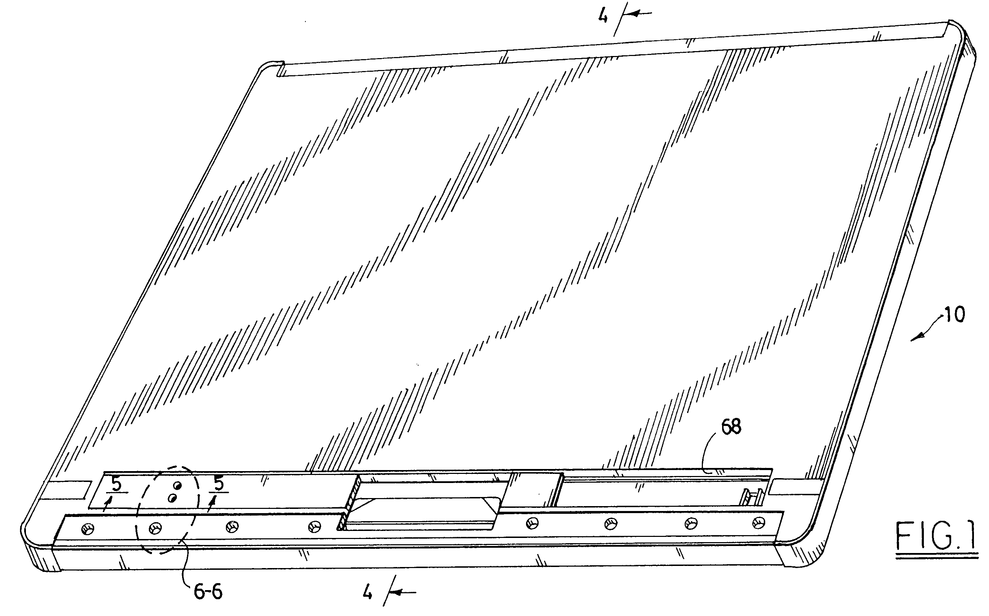

Referring to the drawings, there is illustrated a cassette 10 made in accordance with the present invention. In particular, referring to Figures 1 to 4, there is illustrated a cassette 10 which is adapted to receive a sheet of X-ray film 12. In the particular embodiment illustrated, the cassette 10 is designed to receive an X-ray film for use in mammography. Cassette 10 comprises a base 14 and a cover 16 secured to the base by a hinge 18 so that the cover 16 may be rotated between an open and closed position. A pressure plate assembly 20 is secured to the cover 16. The cover 16, pressure plate assembly 20 and base 14 form a light-tight space for receiving a sheet of X-ray film 12. A latch assembly 22 is provided for securing the cover 16 in closed relationship with base 14.

In the particular embodiment illustrated, the latch assembly 22 includes a latch lever 24 which is rotatably mounted to cover 16 through the use of a pin 26 secured to cover 16 about which the lever 24 rotates. A retaining member 28 is secured to the base 14 and has a hook portion 30. A pawl member 32 is rotatably mounted to pin 26 and has a lower latch portion 34 for engagement with the hook portion 30 so as to maintain the cover in the closed position with the base 14. A projecting member 36 is secured to the outer rim 38 of the cover 16 for limiting the movement of the pawl member 32 toward the outer rim 38 of the cover. A spring 40 biases the pawl member 32 toward the outer rim 38 so as to maintain the latch portion 34 in engagement with the hook portion 30.

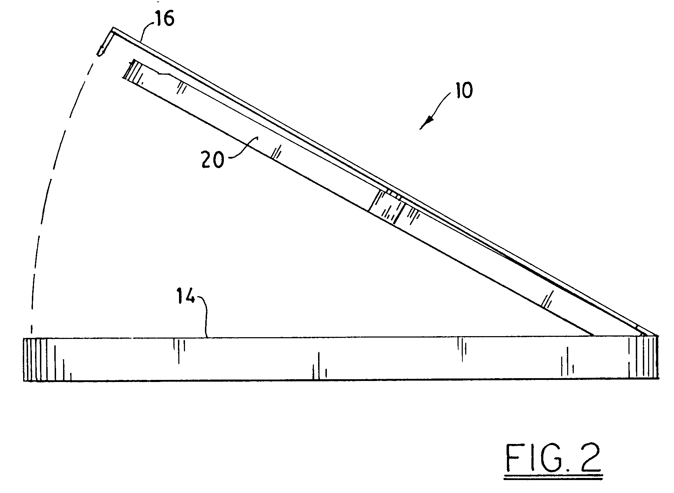

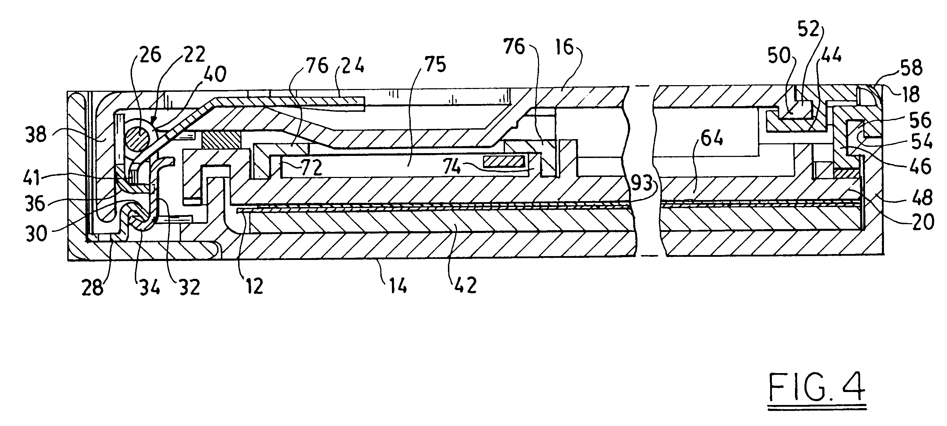

When the lever 24 is rotated outward from the position illustrated in Figure 4, the lower end 41 will cause disengagement of the pawl member 32 so that the cover 16 may be moved to the open position as illustrated in Figure 2. In order to close the cover 16 on to the base 14, the cover 16 is simply moved toward the base 14 until the latch portion 34 engages the hook member 30. It is to be understood that various other latch mechanisms may be used for latching and unlatching the cover 16 with respect to base 14.

A foam pad 42 is secured to the base 14 as is typically done in prior art cassettes. The foam pad 42 is made out of a material typically used for such purposes. In the particular embodiment illustrated, foam pad 42 is made of an open cell polyurethane and is secured to base 14 by an appropriate adhesive.

The hinge 18 includes a first portion 44 which is secured to the cover 16 and a second portion 46 which is secured to the peripheral rear wall 48 of base 14. In the particular embodiment illustrated, the first portion 44 has a generally J-shaped configuration forming a recess 50 for receiving a mating projection 52 on cover 16. In a like manner, the second portion 46 comprises a generally C-shaped configuration forming a recess 54 which receives a mating projection 56 formed in the peripheral rear wall 48. A connecting portion 58 connects the first and second portions 44,46. In the preferred embodiment illustrated, the hinge 18 is integrally formed of a single material so as to provide what is commonly known as a living hinge. In the particular embodiment illustrated, the hinge is made out of polypropylene material. It is, however, to be understood that the hinge 18 may be formed in any other manner and constructed in any desired construction.

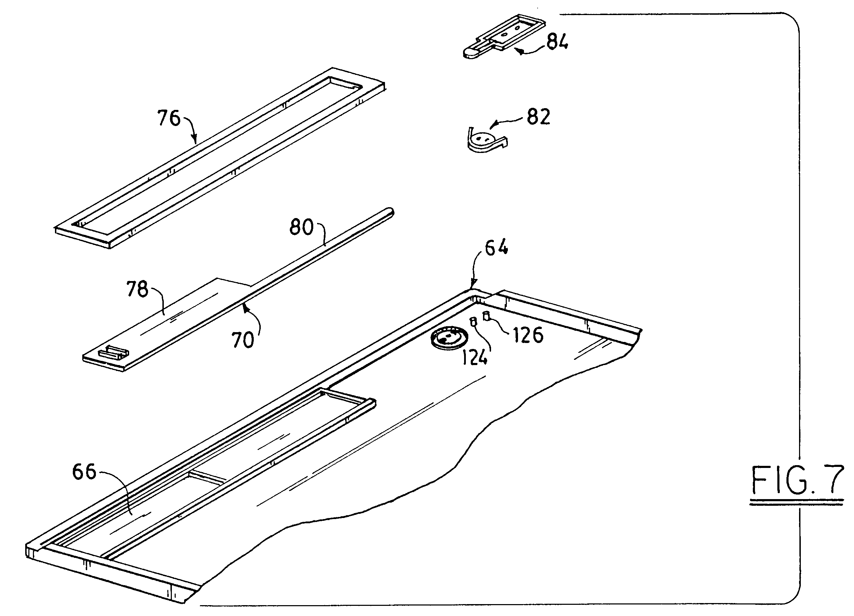

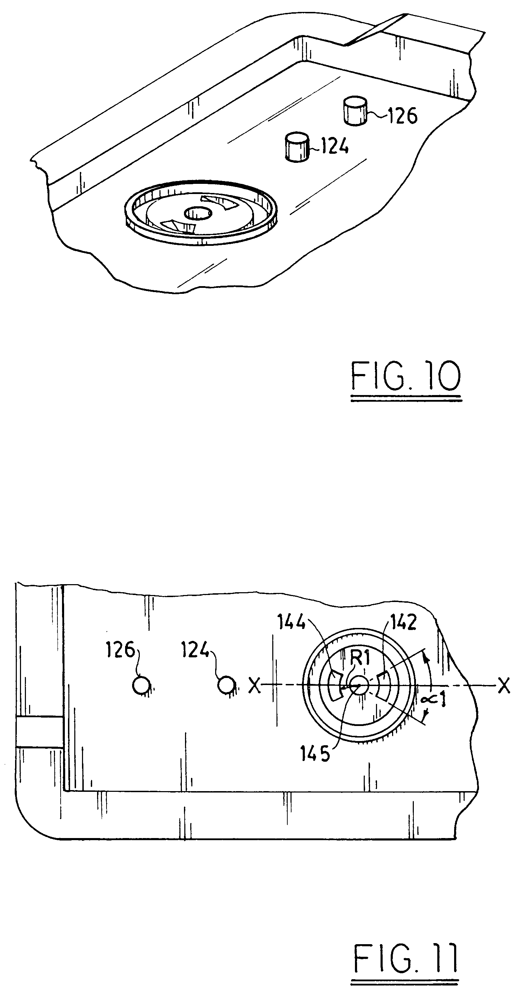

Referring to Figures 4 to 18, there is illustrated in more detail the construction of pressure plate assembly 20. In particular, pressure plate assembly 20 includes a pressure plate 64 having a substantially rectangular opening 66 (see Figure 7) which is in substantial alignment with a substantially rectangular identification opening 68 provided in cover 16 (see Figure 1). In the preferred embodiment illustrated, the openings 66, 68 each have substantially the same size and configuration. Openings 66, 68 allow information, for example, patient identification information, to be exposed on the film as is customarily done in the art. A slideable shutter 70 (Figure 7) is secured to pressure plate 64 for opening and closing the opening 66. Alternatively, the shutter 70 may close the opening 68 in cover 16 and/or both openings 66, 68.

In the particular embodiment illustrated, upstanding projections 72, 74 (Figure 4) are provided so as to define a track (recess) 75 for allowing the shutter 70 to slide within. In the particular embodiment illustrated, the upstanding projections 72, 74 have a substantially rectangular cross-sectional configuration and are spaced apart in size so as to allow the shutter 70 to slide in a predetermined direction. A capture member 76 is provided and secured to projections 72, 74 such that the shutter 70 will be captured therein. In the particular embodiment illustrated, the shutter 70 has a main section 78 (Figure 7) designed to cover opening 66 so as to prevent undesirable light from entering the cassette when the shutter is in the closed position, and an actuating member 80 which is designed to engage the film presence indicator 82 which is provided for identifying if film is present in the cassette.

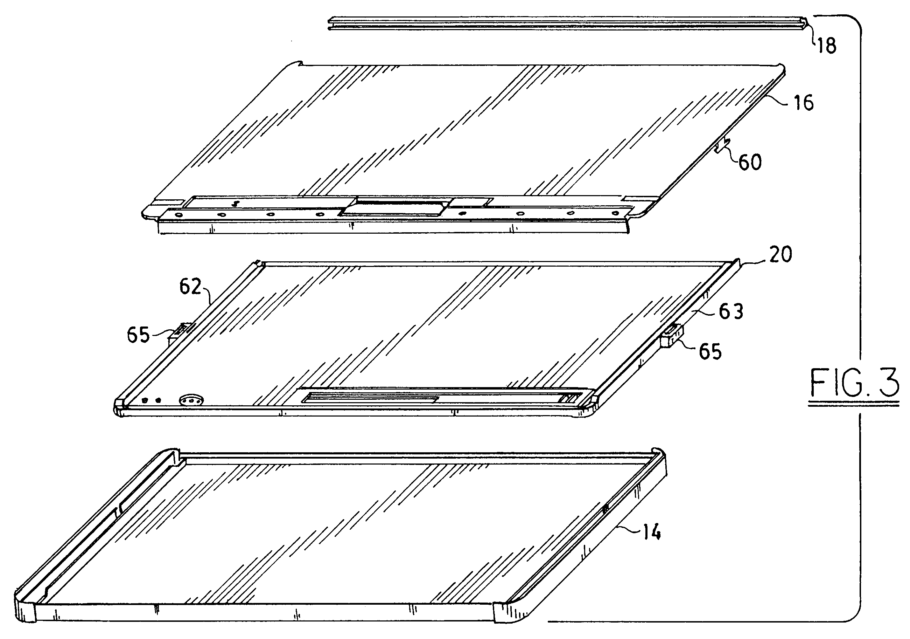

The pressure plate assembly 20 is secured to the cover by a pair of projections 60 (see Figure 3) secured to lateral sides 62, 63 of pressure plate assembly 20. The projections 60 each pass through a retaining opening 65 provided on the sides of the pressure plate 64.

The pressure plate assembly further includes an indicator 82 for indicating when film is present in the cassette and if the shutter 70 has been activated to allow exposure of the film.

Indicator 82 is rotatably mounted about a predetermined axis to pressure plate 64. In particular, the film presence indicator 82 is rotatably held in position by a spring member 84 (Figures 7 and 9B) which is secured to the pressure plate 64.

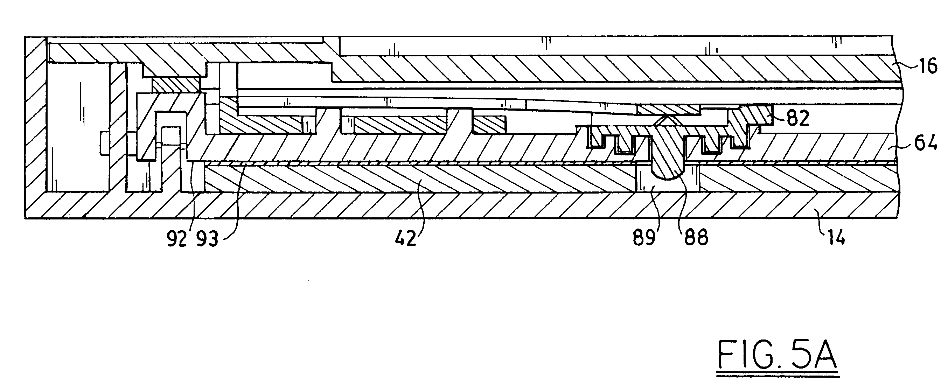

A simulable phosphor screen/layer 93 (Figure 5A) is secured to the lower surface 92 of pressure plate 64. The screen 93 is of any conventional type phosphor screen presently used in the art. In the particular embodiment illustrated, the screen 93 is adhered to the surface 92 by an appropriate adhesive as is typically done in the prior art.

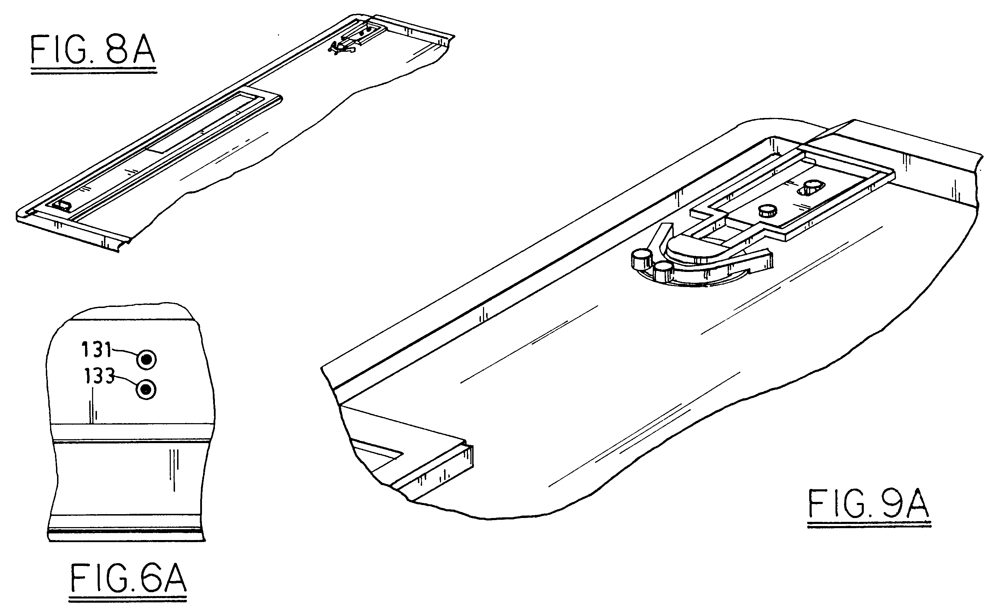

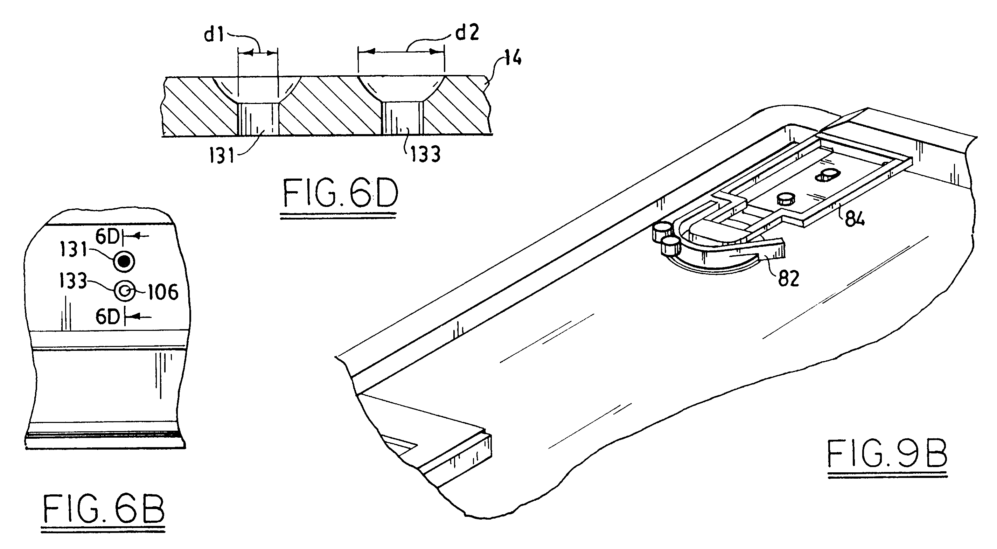

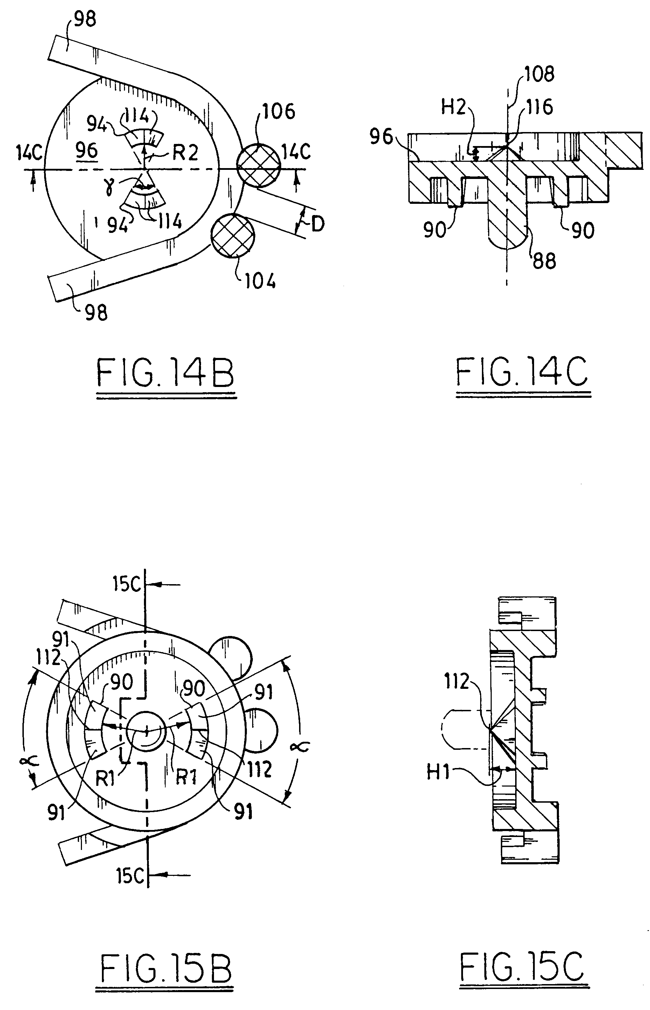

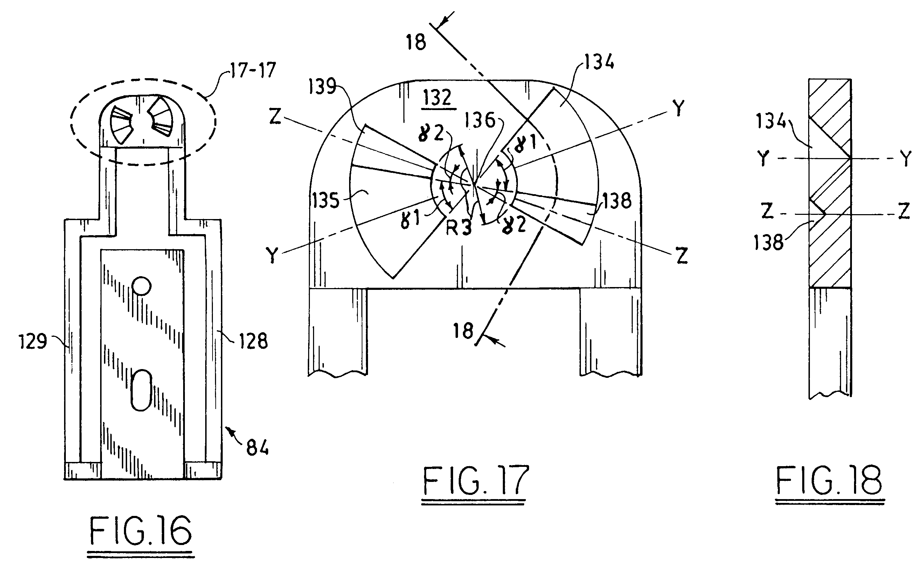

Referring to Figures 14A, 14B, 14C, 15A, 15B and 15C, there is illustrated in greater detail the film presence indicator 82. In particular, the film presence indicator 82 has a central circular platform 86 which supports a peripheral wall 87, a central shaft 88 and a pair of lower cams 90 on its lower surface 92. A pair of upper cams 94 are formed on the upper surface 96 of platform 86. A pair of wings 98 are provided for use in rotating the platform 86 as will be discussed in detail later herein. A pair of bosses 101, 102 are secured to the forward end of the film presence indicator 82. Bosses 101, 102, in the preferred embodiment illustrated, are substantially circular in shape and are spaced about the circumference of the platform 86 a predetermined distance D (Figure 14B). In the embodiment illustrated, the bosses 101, 102 each have a diameter of about 2.5mm. The bosses 101, 102 each have respective upper surfaces 104, 106 which, in the preferred embodiment, are decorated with a light color. In the particular embodiment illustrated, the upper surfaces 104, 106 are colored with a white colored paint. The bosses 101, 102 are positioned on platform 86 so that one or both can be viewed through a pair of indicating openings 131, 133 as best seen by reference to Figures 6A, 6B, 6C and 6D. The openings provided in cover 14 are sized so as to be equal to or less than the size of bosses 101, 102. In the embodiment illustrated, the openings 131, 133 are circular in shape and have a diameter d1 of about 1.5mm. Preferably, as illustrated in Figure 6D, the area surrounding openings 131, 133 in cover 14 is recessed so as to enhance the visibility of the bosses 101, 102. In the embodiment illustrated, the area surrounding openings 131, 133 is substantially dishshaped and has a diameter d2 of about 3.0mm.

The lower cams 90 are spaced an equal distance from the axis 108 of the substantially circular platform and central shaft 88 (Figure 14C). In particular, the lower cams 90 are spaced a distance R1. Each of the lower cams 90 have a pair of lower cam surfaces 91 which merge at a peak 112. Each of the lower cams 90 extend about the circumference an angle α and have a predetermined height H1. Angle α is preferably equal to or less than about 45°. In the particular embodiment illustrated, α is about 30°. Also, in the embodiment illustrated, the height H1 is 1.5mm (0.060in).

The upper cams 94 are disposed a distance R2 from the rotational axis 108 which is less than the distance R1. Additionally, the upper cams 94 extend a circumferential distance about the platform an angle γ. Preferably, angle γ is equal to or less than about 45°. In the particular embodiment illustrated, the angle γ is approximately 25°. In the preferred embodiment illustrated, the angle γ is less than the angle α. Additionally, the upper cams 94 have a pair of upper cam surfaces 114 which terminate at a peak 116 (Figure 14C), the peak 116 having a height H2 with respect to the surface 96. The height H2 of upper cams 94 is preferably less than the height H1 of lower cams 90. As would be discussed later, the providing of the lower cams 90 at a greater distance R1 than the radius R2 of upper cams 94 and providing the lower cams 90 with a height greater than the height of the upper cams 94 provides a mechanical advantage for predisposing the film presence indicator 82 in a predetermined orientation.

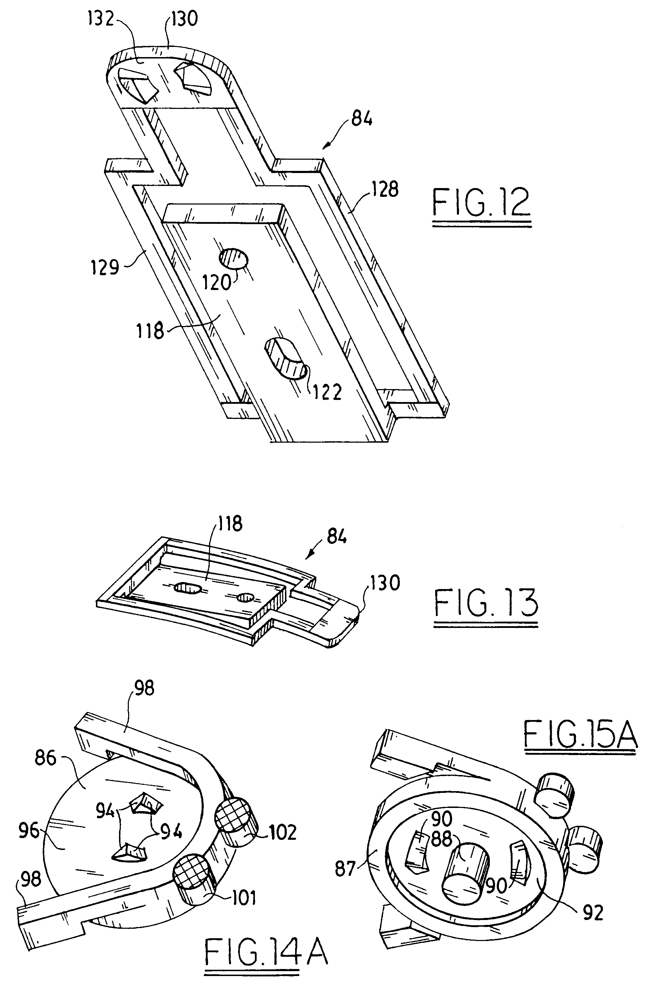

Referring to Figures 12 and 13, there is illustrated a spring member 84 which secures the film presence indicator 82 to the pressure plate 64 while still allowing the indicator to rotate about axis 108. In particular, the spring member 84 includes a mounting base 118 which is used to mount the spring member 84 to the pressure plate 64. In particular, there is provided a pair of openings 120, 122 which are designed to receive upstanding projections 124, 126 (Figure 7) formed on the upper surface of pressure plate 64. The upstanding projections 124, 126 are aligned such that they are received in corresponding respective openings 120, 122. In the particular embodiment illustrated, opening 120 is substantially circular, while opening 122 is substantially oval so as to accommodate for alignment errors which may occur between the openings 120, 122 and projections 124, 126. In the preferred embodiment illustrated, the projections 124, 126 are made of a plastic material which is ultrasonically headed so as to secure the spring member 84 to the pressure plate 64. It is to be understood that the mounting base 118 may be secured to the pressure plate 64 in any desired manner.

The spring member 84 includes a pair of side arm members 128, 129 (Figure 12) which have, at one end, been secured to the base member 118 and the other end being secured to a head portion 130. As illustrated in Figure 13, the side arm members 128, 129 have a configuration such that the head portion, in its natural state, is below the mounting base 118. Thus, when the spring member 84 is secured to pressure plate 64, a biasing force will be applied in the direction of pressure plate 64.

In the preferred embodiment illustrated, the spring member 84 is a single unitary member molded from an appropriate plastic material. In the particular embodiment illustrated, the spring member 84 is made out of a polycarbonate plastic material. The head portion 130 has a bottom surface 132. The head portion 130 is provided with a first pair of pockets 134, 135 (Figure 17) which are disposed approximately 180° apart and equal distance from the axis 136. The associated pair of pockets 134, 135 are designed to receive the cams 94 on the upper surface 96 of film presence indicator 82. The pockets 134, 135 have a substantially V-shaped cross-sectional configuration and are designed to mate with the corresponding cams 94 such that the film presence indicator will be held in a first predetermined orientation as represented by axis Y-Y. A second pair of pockets 138, 139 are provided adjacent pockets 134, 136 which are designed also to receive the cams 94 and for orienting the film presence indicator 82. The pockets define a second predetermined orientation represented by axis Z-Z. The pockets 134, 135, 138, 139 are also disposed about the axis 136 a radius R3. In the preferred embodiment illustrated, the pair of pockets 134, 135 extend an angle γ1 about the axis 136. Preferably, the angle γ1 is substantially equal or greater than the angle γ of cams 94. Thus, when cams 94 are in this position, the cams 94 will fit substantially totally within the pockets 134, 135. The pockets 138, 139 extend an angle γ2 about axis 136 which is substantially less than angle γ1. In the particular embodiment illustrated, the angle γ1 is equal to approximately 25° which is less than the angle γ through which the cams 94 extend.

Referring to Figure 11, there is illustrated the portion of pressure plate 64 which is designed to receive the other side of the film presence indicator 82. In particular, the pressure plate 64 is provided with a pair of pockets 142, 144 having a configuration designed to mate and receive the lower cams 90 provided on the lower surface 92 of film presence indicator 82. In particular, the pair of pockets 142, 144 are spaced approximately 180° about the rotational axis 145 which is designed to be aligned with the rotational axis 108 of central shaft 88. The pockets 142, 144 are spaced a distance R1 from the central axis 145 such that they are substantially the same distance from the axis as the lower cams 90 are from central axis 108. Preferably, the pockets 142, 144 extend an angle α1 which is greater than or equal to angle α through which the lower cams 90 extend. This allows the lower cam 90 to be received totally within the pockets 142, 144. The size and shape of the pockets 142, 144 are such that they closely conform to the outer surface of the cams 90 when the cams 90 are fully seated within the pockets 142, 144. This orients the film presence indicator 82 in a third predetermined orientation represented by axis X-X.

The film presence indicator 82 is designed such that it will be in one of three positions represented by axes X-X, Y-Y and Z-Z. In the initial condition of the film presence indicator 82, when no film is present in the cassette and the cassette is in the closed position as represented by Figure 5A, the central shaft 88 is biased by the spring member 84 and is received in an opening 89 provided in foam pad 42. Since the lower cams 90 and associated pockets 142, 144 are at a greater distance from the central axis 108 and the height of the lower cams 90 is greater than the height of the cams 94, there is provided a mechanical advantage such that the film presence indicator tends to want to go into position as illustrated in Figures 5A, 6A and 9A. In this position, the bosses 101, 102 do not align with the openings 131, 133. Thus, the user would know from this position that no film was present in the cassette.

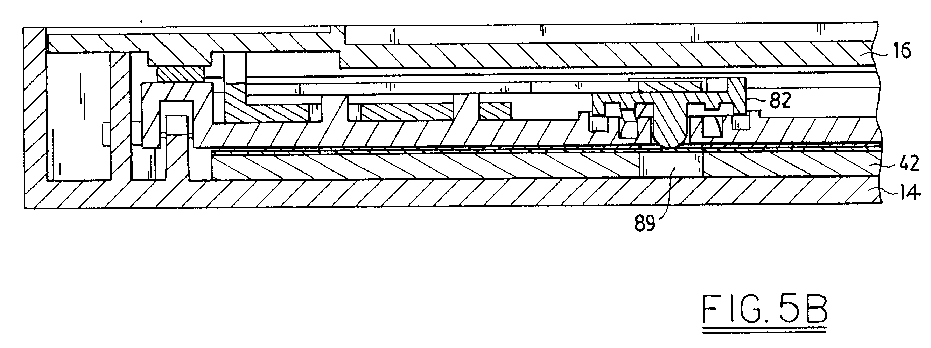

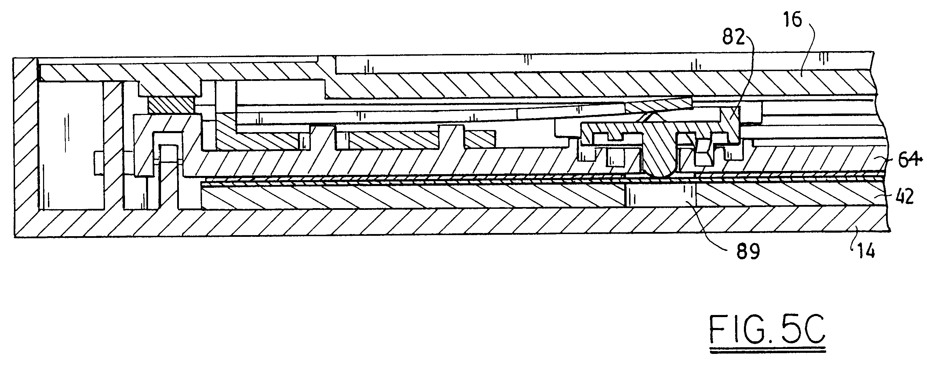

Referring to Figures 5B, 6B and 9B, this illustrates the position of the film presence indicator 82 within the cassette and the bosses as they would be viewed through the openings 131, 133 in cover 16. In this position, film is present in the cassette and extends across opening 89 provided in pad 42 secured to base 14. Thus, the lower cam 90 will be caused to come out of mating engagement with their corresponding pockets 142, 144, thus allowing upper cams 94 and pockets 134, 135 to move the film presence indicator into the position illustrated in Figures 5B, 6B and 9B. In this orientation, boss 102 will be reviewed through opening 133 whereas nothing will be seen through the other opening 131 as illustrated by Figure 6B. The film presence indicator, in this position, indicates that film is present in the cassette, however, the window shutter has not been activated.

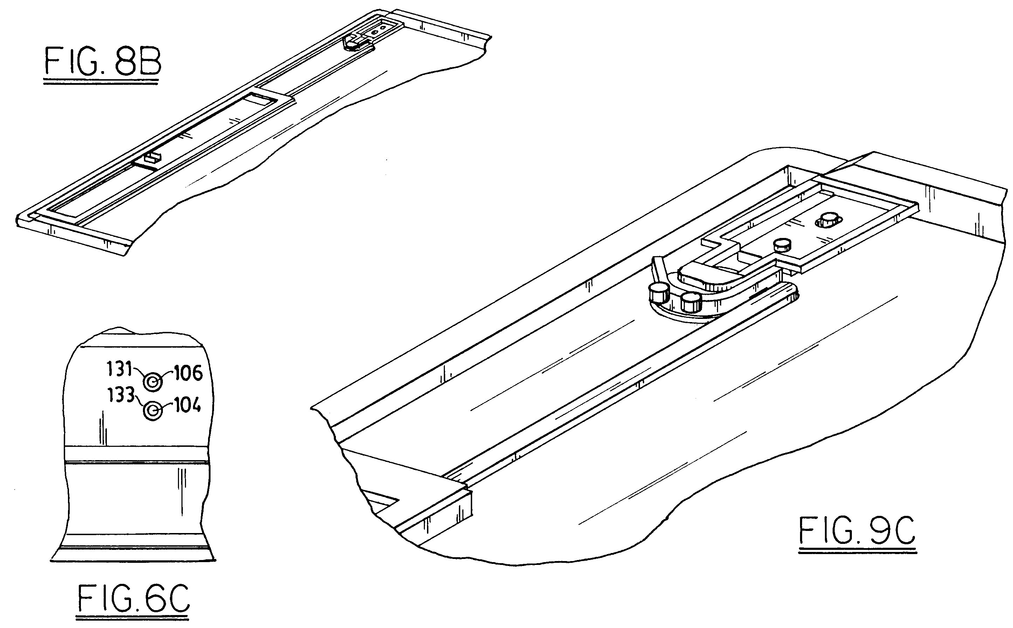

Referring to Figures 5C, 6C and 9C, there is illustrated the position of the film presence indicator 82 when the shutter 70 has been activated and film is present in the cassette 10. As can be seen by Figure 9C, the shutter 70, in this position, engages one of the wings 98 of the film presence indicator 82. This forces the upper cams 94 to be rotated in the orientation as represented by axis Z-Z, and engage a second pair of pockets 138, 139. Thus, when the shutter 70 is closed, the film presence indicator 82 will remain in this position since the cams 94 will be engaged with the corresponding pockets 138, 139. In this position, the surfaces 104, 106 of bosses 101, 102 can be both viewed through openings 131, 133. Thus, there is provided means for determining, without opening of the cassette, whether there is film present in the cassette 10, and whether or not the window shutter 70 has been activated, for example, for the placement of identification on the X-ray film thus avoiding any accidental exposure of the X-ray film.

In the preferred embodiment illustrated, two bosses are provided which are viewed through two openings in the cover to provide an indication if film is present and/or if the shutter has been activated. This can also be accomplished by use of one boss and two openings in the cover and still provide the two indicating modes. Alternatively, one opening may be provided in the cover and two bosses of two different colors may be provided on the film presence indicator.

The present invention provides a cassette having a film presence indicator which will indicate the presence of film in the cassette regardless of the cassette orientation, and will, in addition, indicate whether a patient identification window of the cassette has been actuated. Further, when a cassette is open for removal of the film, the film presence indicator will push the film away from the upper screen assuring that the film is in the proper location for extraction by automatic cassette loaders.

## Claims

1. A film cassette (10) comprising:-
a base portion (14);
a cover portion (16) adapted to close upon the base portion (14) and having an identification window portion (68);
a pressure plate (64) disposed within the cassette (10), the pressure plate (64) and the base portion (14) forming a space for receiving a sheet of film material, the pressure plate (64) having an identification window portion (66) which is in substantial alignment with the identification window portion (68) of the cover portion (16);
a light-tight slideable window shutter (70, 78, 80) for covering respective identification window portions (66, 68) of the pressure plate (64) and/or the cover portion (16), the slideable window shutter (70, 78, 80), when in a first position, provides a light-tight seal for the identification windows (66, 68), and when in a second position, allows information to be provided to the film material contained within the cassette (10); and
an indicator assembly (82, 84, 87, 88, 90, 92, 94, 96, 98, 101, 102, 104, 106) disposed within the cassette (10) and at least partially visible through at least one opening (131, 133) provided in the cover portion (16) for indicating when film is present within the cassette (10) and for indicating when the slideable window shutter (70, 78, 80) has been opened.

2. A film cassette according to claim 1, wherein the indicator assembly (82, 84, 87, 88, 90, 92, 94, 96, 98, 101, 102, 104, 106) is secured to the pressure plate (64).

3. A film cassette according to claim 1 or 2, wherein the indicator assembly (82, 84, 87, 88, 90, 92, 94, 96, 98, 101, 102, 104, 106) includes a rotatable indicating member (82, 86, 87, 88) rotatable about a central axis (108) and having an upper surface (96) and a lower surface (92), and a spring (84, 118, 128, 129, 130) secured to the pressure plate (64) and engaging the rotatable indicating member (82, 86, 87, 88) so as to bias it toward the pressure plate (64), the upper surface (96) having at least one upper cam (94, 114, 116) and the lower surface (92) having at least one lower cam (90, 91, 112).

4. A film cassette according to claim 3, wherein the rotatable indicating member (82, 86, 87, 88) includes a shaft (88) designed to pass through an opening (89) provided in the pressure plate (64), the shaft (88) being designed to engage the surface of a sheet of film material placed between the pressure plate (64) and the base portion (14).

5. A film cassette according to claim 3 or 4, wherein the rotatable indicating member (82, 86, 87, 88) includes first and second indicating surfaces (104, 106) for indicating the presence of film and whether the window shutter (70, 78, 80) has been activated, the first and second indicating surfaces (104, 106) being capable of being viewed through the openings (131, 133) provided in the cover portion (16).

6. A film cassette according to claim 4 or 5, wherein the shaft (88) is centrally located at the axis of rotation (108) of the indicating member (82, 86, 87, 88).

7. A film cassette according to any one of claims 3 to 6, wherein the spring (84, 118, 128, 129, 130) is provided with at least one first cam pocket (134, 135) for receiving each upper cam (94, 114, 116) such that the rotatable indicating member (82, 86, 87, 88) will be biased in a first predetermined orientation when each upper cam (94, 114, 116) engages each first cam pocket (134, 135).

8. A film cassette according to claim 7, wherein the spring (84, 118, 128, 129, 130) is provided with at least one second cam pocket (138, 139) for receiving each upper cam (94, 114, 116) such that the rotatable indicating member (82, 86, 87, 88) will be biased in a second predetermined orientation when each upper cam (94, 114, 116) engages each second cam pocket (138, 139).

9. A film cassette according to any one of claims 3 to 8, wherein the pressure plate (64) is provided with at least one third cam pocket (142, 144) for receiving each lower cam (90, 91, 112) such that the rotatable indicating member (82, 86, 87, 88) will be biased in a third predetermined orientation when each lower cam (90, 91, 112) engages each third cam pocket (142, 144).

10. A film cassette according to claim 9, wherein each upper cam (94, 114, 116), each lower cam (90, 91, 112) and the rotatable indicating member (82, 86, 87, 88) each has a configuration such that when the shaft (88) extends through the opening (89) in the pressure plate (64) and no film is present in the cassette (10), each lower cam (90, 91, 112) and associated pocket(s) (142, 144) will determine the rotational orientation of the rotatable film indicator member (82, 86, 87, 88), and when film is present in the cassette (10), each upper cam (94, 114, 116) and associated pocket(s) (134, 135) will determine the rotational orientation of the rotatable indicating member (82, 86, 87, 88).

11. A film cassette according to any one of claims 3 to 10, wherein the spring (84, 118, 128, 129, 130) comprises a base (118) secured to the pressure plate (64) and at least one spring arm (128, 129) extending from the base (118) which terminates in a spring head (130).

12. A film cassette according to claim 11, wherein the first cam pockets (134, 135) and second cam pockets (138, 139) are located in the spring head (130).

13. A film cassette according to any one of claims 3 to 12, wherein the upper surface (96) and the lower surface (92) of the rotatable indicating member (82, 86, 87, 88) each has respectively a pair of upper cams (94, 114, 116) and a pair of lower cams (90, 91, 112).

14. A film cassette according to claim 13, wherein the spring (84, 118, 128, 129, 130) is provided with a first pair of cam pockets (134, 135) and a second pair of cam pockets (138, 139) for receiving the pair of upper cams (94, 114, 116) such that the rotatable indicating member (82, 86, 87, 88) will be biased in a first or second predetermined orientation when the upper cams (94, 114, 116) respectively engage the first pair of cam pockets (134, 135) or second pair of cam pockets (138, 139).

15. A film cassette according to claim 13 or 14, wherein the pressure plate (64) is provided with a third pair of cam pockets (142, 144) for receiving the pair of lower cams (90, 91, 112) such that the rotatable indicating member (82, 86, 87, 88) will be biased in a third predetermined orientation when the pair of lower cams (90, 91, 112) engages the third pair of cam pockets (142, 144).

16. A film cassette according to any one of claims 3 to 15, wherein each lower cam (90, 91, 112) is positioned on the rotatable indicating member (82, 86, 87, 88) at a radius (R1) greater than the radius (R2) at which each upper cam (94, 114, 116) is located on rotatable indicating member (82, 86, 87, 88).

17. A film cassette according to claim 16, wherein each lower cam (90, 91, 112) has a slope greater than the slope of each upper cam (94, 114, 116).

18. A film cassette according to any one of the preceding claims, wherein the window shutter (70, 78, 80) has a tongue (80) designed to engage the rotatable indicating member (82, 86, 87, 88) so as to rotate it to the second predetermined orientation.
